# EUROPÄISCHE PATENTSCHRIFT

(11) **EP 0 620 095 B1**
(45) Veröffentlichungstag und Bekanntmachung des Hinweises auf die Patenterteilung: **07.01.1999**
(21) Anmeldenummer: 93115689.7
(22) Anmeldetag: 29.09.1993
(51) Int. Cl.: B29C 45/17, B29C 45/66

(54) **Spritzgiessmaschine**
Injection moulding machine
Machine à mouler par injection

(30) Priorität: 20.03.1993 DE 4308962; 24.04.1993 DE 4313473; 13.07.1993 DE 4323395
(43) Veröffentlichungstag der Anmeldung: 19.10.1994
(73) Patentinhaber: Hehl, Karl, 72290 Lossburg (DE)
(72) Erfinder: Hehl, Karl, 72290 Lossburg (DE)
(74) Vertreter: Frank, Gerhard, Dipl.-Phys.

(56) Entgegenhaltungen:
- EP-A- 0 427 438
- EP-A- 0 504 580
- EP-A- 0 554 068
- DE-A- 4 141 259
- DE-A- 4 230 348
- DE-B- 1 116 386
- DE-U- 9 212 479
- FR-A- 2 516 857
- US-A- 2 266 129
- US-A- 3 577 596
- US-A- 3 704 973
- PATENT ABSTRACTS OF JAPAN vol. 14, no. 6 (M-916) (3949) 9. Januar 1990 & JP-A-01 255 516 (FANUC)

## Beschreibung

Die Erfindung betrifft eine Spritzgießmaschine nach dem Oberbegriff des Anspruches 1.

Eine derartige Spritzgießmaschine ist beispielsweise aus dem DE-U 92 12 480 bekannt. Bei dieser Spritzgießmaschine sind Abstützelement und Formträgerplatte gelenkig und kippbar mit einem gußeisernen Maschinenfuß verbunden, der die während des Schließens auftretende Schließkraft und die während des Einspritzens auftretende Auftriebskraft zwischen dem Abstützelement und der Formaufspannplatte ableitet. Um Ausweichbewegungen der Formplatten wie dem 'Kirschsteineffekt' zu entgehen und um eine Formparallelität zu erreichen, sind Führungen für den beweglichen Formträger vorgesehen, um diesen insbesondere bei exzentrischer Belastung beispielsweise durch außermittige Formhohlräume parallel zur anderen Formhälfte zu führen. Es wird das Prinzip verfolgt, den Maschinenfuß so steif auszubilden, daß er sich unter den entstehenden Kräften nur minimal verformt und im übrigen die verbleibenden Verformungen durch die gelenkige Lagerung von Formträgerplatte und Abstützelement von der Form fernzuhalten. Allerdings treten bei der Herstellung des gußeisernen Maschinenfußes aufgrund der Größe des Gußkörpers Schwierigkeiten durch Lunker auf. Da die stationäre Formträgerplatte am Maschinenfuß gelenkig angelenkt ist, läßt sich ein Düsennullpunkt aufgrund der beim Schließvorgang auftretenden Kräfte nicht reproduzierbar einstellen.

Aus der EP-A 504 580 ist eine Preßvorrichtung für eine Abbrennstumpfschweißmaschine bekannt, bei der ein gesondertes Kraftübertragungselement vorgesehen ist, das an beiden Enden einer Presse angelenkt ist. Zum Lösen des Kraftübertragungselements ist dieses mit Sicherungsringen an den beiden Enden gehalten, ohne daß Vorkehrungen getroffen sind, gesonderte Gelenkteile für sich austauschen zu können. Die Pressenteile selbst sind einerseits stationär mit dem Maschinenfuß verbunden und andererseits über ein Stützelement abgestützt, das sich beim Aufbringen der Preßkraft so bewegt, daß ein Anlenkungspunkt auf einem Radius gegenüber dem Verbindungspunkt mit dem Maschinenfuß bewegt wird. Dies führt zu einer vertikalen Komponente bei den Kräften und damit zu einer ungewünschten Auslenkung, die die Präzision der Vorrichtung negativ beeinflußt.

Aus der US-A 3,704,973 ist eine Vorrichtung bekannt, bei der an einer Formschließeinheit ein Elektromotor um eine mittig in ihm liegende Antriebsspindel angeordnet ist. Der Rotor des Elektromotors steht dabei mittelbar mit einer Gewindemutter in Verbindung, die mit der Spindel in Eingriff steht. Es handelt sich jedoch dabei noch nicht um einen Hohlwellenmotor, bei dem der Rotor zugleich die Spindelmutter ist.

Nach der DE-A 42 30 348 sind ein Abstützelement und eine Formträgerplatte gelenkig mit einem gußeisernen Maschinenfuß verbunden, der die während des Schließens und während des Einspritzens auftretenden Kräfte ableitet. Über einen Kniehebelmechanismus, bei dem die Antriebseinrichtung an den Anlenkungspunkten des Kniehebels frei aufgehängt ist, sind der bewegliche Formträger und ein Abstützelement für den Kniehebel gelenkig miteinander verbunden, wodurch Ausweichbewegungen des beweglichen Formträgers vermieden werden. Der Maschinenfuß ist dabei nach der DE-U 92 12 480 ausgebildet.

In der nachveröffentlichten EP-A 554 068 wird ein Verformungselement vorgesehen, das sich verformen kann, ohne daß im wesentlichen von den Bewegungs- und Spritzkräften hervorgerufene Spannungen in den Maschinenfuß abgeleitet werden. Das Verformungselement bildet mit den weiteren Teilen der Formschließeinheit einen geschlossenen Kraftrahmen und kann den jeweiligen Einsatzbedingungen optimal angepaßt werden. Die Verformungen haben nahezu keinen Einfluß auf die Lage der festen Aufspannplatte. Am Maschinenfuß angeschraubte Peripheriegeräte, wie Handling- und Entnahmeeinrichtungen werden von den Verformungen nicht beeinflußt, so daß eine exakte Ansteuerung von Ablagepunkten reproduzierbar möglich ist. Auch der horizontale Düsennullpunkt bleibt selbst bei maximaler Zuhaltekraft bei Null stehen, da der Düsennullpunkt durch die starre Verbindung zwischen der festen Aufspannplatte und dem Maschinenfuß festgelegt ist. Es wird also das Prinzip verfolgt, die Verformungen über ein Verformungselement abzuleiten, das auf weitere Teile der Maschine keinen Einfluß hat, während die Schließkräfte ungehindert in Schließrichtung aufgebracht werden. Aufgrund der abgekoppelten Verformungen ist ein sicheres Schließen des Spritzgießwerkzeuges über den gesamten Einspritzvorgang gewährleistet. Auf Holme kann teilweise ganz verzichtet werden, wodurch ein besserer Zugang zum Spritzwerkzeug und kürzere Umrüstzeiten zu verwirklichen sind. Allerdings sind bei dieser Vorrichtung die Lagerpunkte für das Verformungselement unmittelbar am stationären Formträger und an einem Abstützelement angeformt. Sie gleiten dabei in Augen des Verformungselements. Dadurch ergeben sich einerseits Schwierigkeiten hinsichtlich der Einstellung der Formparallelität, andererseits aber treten im Laufe der Lebensdauer der Maschine Verschleiße an den Gelenken auf, die einen vollständigen Austausch von Formträger und Verformungselement erforderlich machen.

Ausgehend von diesem Stand der Technik liegt der Erfindung die Aufgabe zugrunde, eine Spritzgießmaschine der eingangs genannten Gattung derart weiterzubilden, daß die an der Formschließeinheit auftretenden Verformungen auch nach langer Lebensdauer noch ohne Einfluß auf den Maschinenfuß abgeleitet werden, ohne die Formparallelität zu beeinträchtigen.

Diese Aufgabe wird durch die Merkmale des Anspruches 1 gelöst.

Zweckmäßige Weiterbildungen der Erfindung sind in den abhängigen Ansprüchen beschrieben.

Dadurch werden jetzt nicht mehr nur die Verformungen außerhalb der Hauptbestandteile der Formschließeinheit abgeleitet und aufgenommen, wodurch eine auf Druck beanspruchte formschlüssige Verbindung zwischen den Teilen entsteht, die einen sicheren Aufbau der Schließkraft gewährleistet, sondern durch die lösbare Befestigung der Gelenkteile und die Anordnung der Gelenke läßt sich die Formparallelität leicht ein- und nachjustieren. Durch die Anordnung der Gelenke wird die Biegebeanspruchung der Formträger reduziert, was eine geringere Dimensionierung der Formträger erlaubt und somit zur Bauhöhenreduzierung beiträgt. Bei Verschleiß der Gelenke lassen sich diese Teile leicht austauschen, ohne daß gleichzeitig nahezu die gesamte Formschließeinheit ausgetauscht werden muß. Die lösbare Befestigung der Gelenke schafft aber auch die baulichen Voraussetzungen für eine leichte Veränderbarkeit der Formaufspannmaße. Gleichzeitig sind die Verformungen von Maschinenfuß und Peripheriegeräten abgekoppelt. Ein Düsennullpunkt liegt unveränderlich fest. Auf Holme kann verzichtet werden.

Soll das Formaufspannmaß wie im asiatischen Raum aufgrund des dortigen Werkzeugbaus oft üblich, verändert werden, können Unterlegstücke vorgesehen werden (Anspruch 4).

Nach Anspruch 5 wird ein Kniehebelmechanismus vorgesehen, dessen Gelenke zugleich als Gelenke zur Anlenkung des Kraftübertragungselements dienen. Der Kniehebelmechanismus ist ein sogenannter "Y-Kniehebel", so daß sich eine äußerst platzsparende Bauweise der Formschließeinheit ergibt, wenngleich für diese Antriebseinrichtung ein überschaubarer Raum vorgesehen werden muß.

Eine Ausgestaltung gemäß Anspruch 6 hat den Vorteil, daß eine Kugelrollspindel ohne gesonderten Raumbedarf im Innern des Hohlwellenmotors geführt werden kann. Zudem entfällt beim Hohlwellenmotor ein zusätzliches Übersetzungsgetriebe, so daß der Raumbedarf im Maschinenfuß, der die Antriebseinrichtung aufnimmt, noch weiter minimiert ist.

Da sowohl beweglicher Formträger als auch Hebelmechanismus kürzer gebaut werden, wird der Bügel kürzer und damit leichter. Die Verwendung des Verformungselementes Bügel hat den Vorteil, daß im "Windschatten" des Bügels Führungen vorgesehen werden können, so daß die in den Formspannraum reichenden Führungen in einem Raum angeordnet werden können, der ohnehin durch die Bügel für eine Gießform nur noch bedingt zugänglich ist. Bei Verwendung eines frei verformbaren Verformungselementes muß die gesamte Formschließeinheit an einem zweiten Punkt zuverlässig und axial beweglich abgestützt werden. Bei einem Kniehebelmechanismus ist dazu nicht unbedingt ein Abstützelement erforderlich, da lediglich eine gelenkige Verbindung mit dem Verformungselement nötig ist. Um den Aufwand und den Platzbedarf für die Abstützplatte zu sparen, wird gemäß Anspruch 7 der zweite gegenüber dem Maschinenfuß axial bewegliche Lagerungspunkt der Formschließeinheit so gewählt, daß er im Bereich des Anlenkungspunktes des Kniehebelmechanismus auf der vom beweglichen Formträger abgewandten Seite angeordnet ist. Die Anlenkung erfolgt ohne Störung der Funktionsweise des Bügels am Bügel selbst, vorzugsweise im Bereich der neutralen Faser.

Im folgenden werden mehrere Ausführungsbeispiele der Erfindung anhand der Zeichnungen beschrieben. Es zeigen:
- Fig. 1: eine Seitenansicht der Formschließeinheit der Spritzgießmaschine,
- Fig. 2: einen Schnitt gemäß Linie 2-2 von Fig. 1,

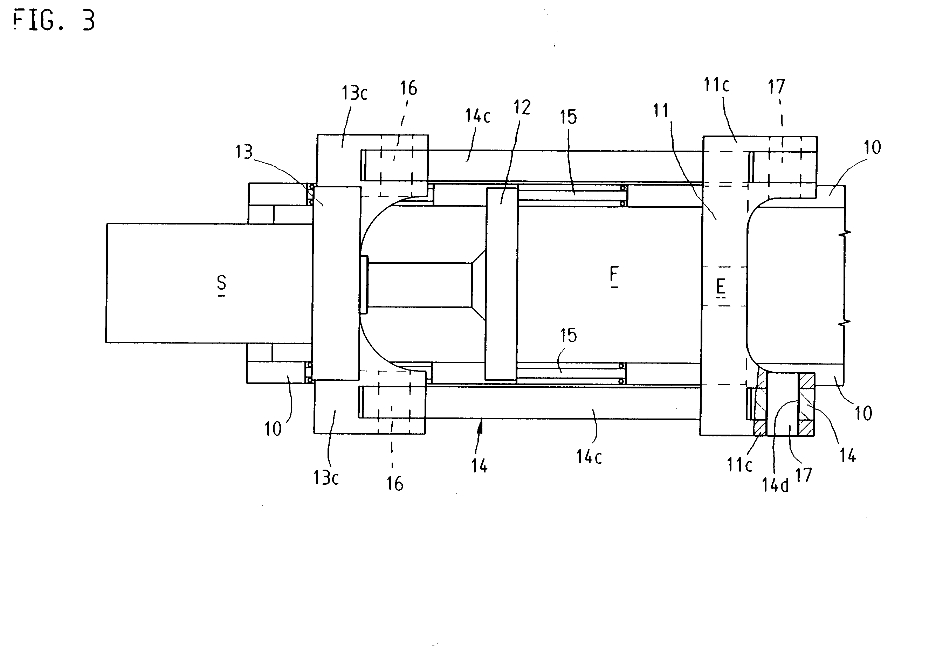

- Fig. 3: eine Draufsicht auf die Formschließeinheit gemäß Fig. 1,

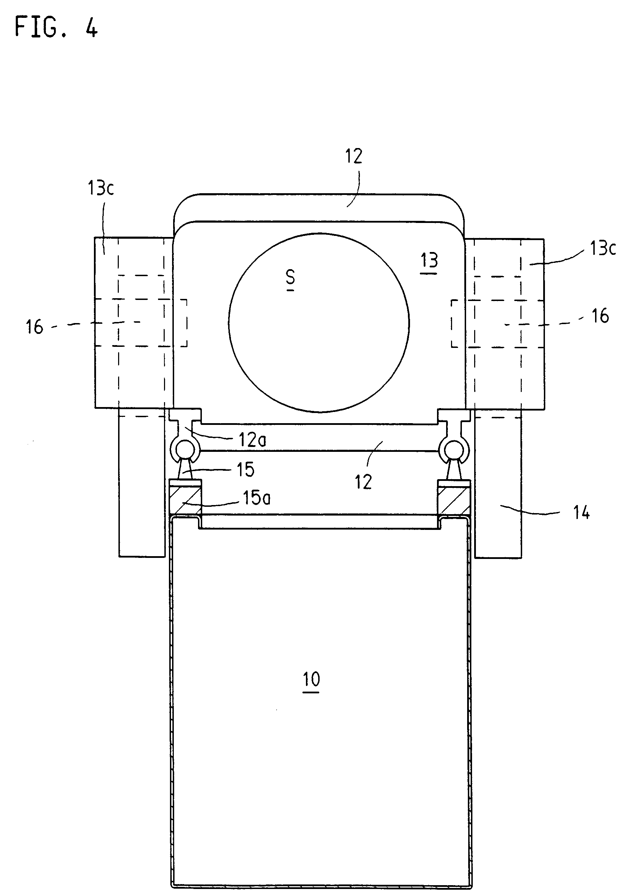

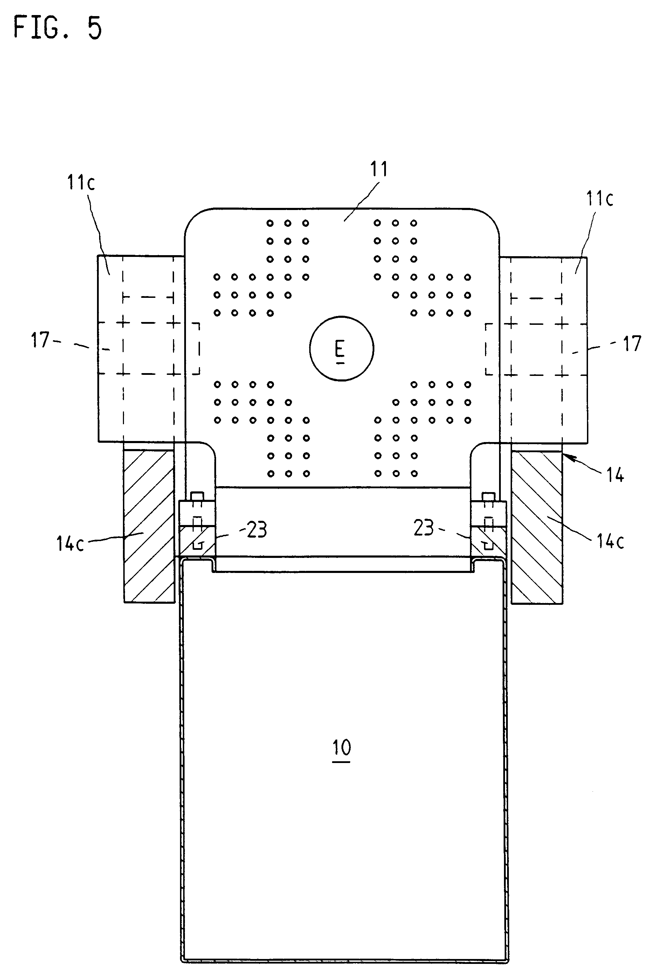

- Fig. 4, 5: Schnitte gemäß den Linien 4-4, 5-5 von Fig. 1,
- Fig. 6: ein Verformungsbild der Spritzgießmaschine in einer Ansicht gemäß Fig. 1,

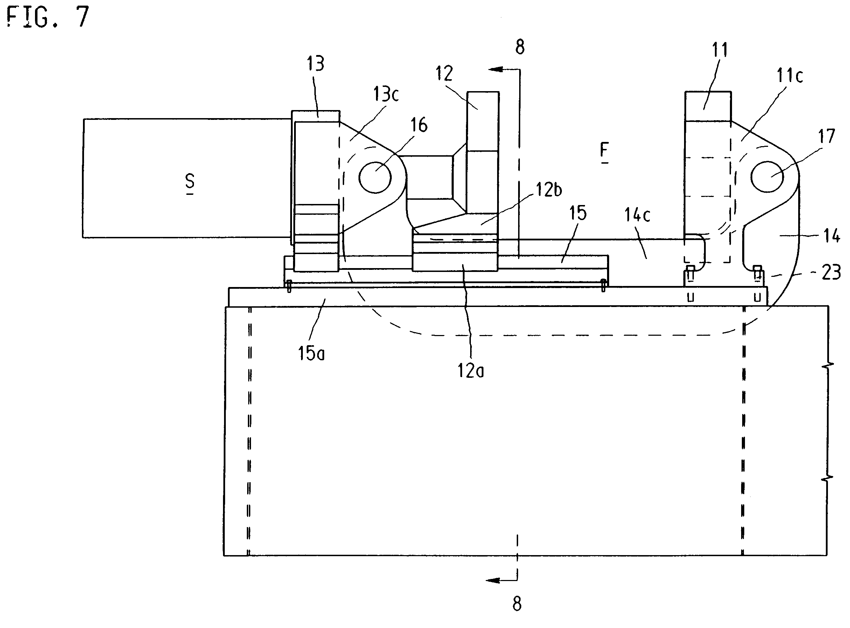

- Fig. 7, 8: Darstellungen der Spritzgießmaschine in Ansichten gemäß Fig. 1, 2 eines weiteren Ausführungsbeispiels,
- Fig. 9-13: Darstellungen einer dritten Ausführungsform in Ansichten gemäß den Fign. 1-5 mit einem veränderten Verformungselement,
- Fig. 14,15: Seitenansicht und teilweise geschnittene Draufsicht der gelenkigen Lagerung im dritten Ausführungsbeispiel,
- Fig. 15a: eine Darstellung gemäß Fig. 15 mit einem Unterlegstück,
- Fig. 16: die Spritzgießmaschine in einer Ansicht gemäß Fig. 1 in einer vierten Ausführungsform mit einem Schwenkrahmen,
- Fig. 17: ein fünftes Ausführungsbeispiel der Formschließeinheit in einer Seitenansicht mit einem "Y-Kniehebel",
- Fig. 18: eine Draufsicht auf die Formschließeinheit gemäß Fig. 17,
- Fig. 19: einen Schnitt durch die Formschließeinheit gemäß Linie 19-19 von Fig. 17,
- Fig. 20: einen Schnitt durch die Formschließeinheit gemäß Linie 20-20 von Fig. 17,
- Fig. 21: einen vergrößerten Ausschnitt gemäß Linie 21-21 von Fig. 17 im Bereich der Lagerung,
- Fig. 22: einen geschnittenen vergrößerten Ausschnitt aus Fig. 17 im Bereich eines Hohlwellenmotors,
- Fig. 23,24: einen Schnitt durch die Formhöhenverstelleinrichtung von Fig. 17 im Bereich eines Spindelantriebs bei unterschiedlichen Formhöhen,

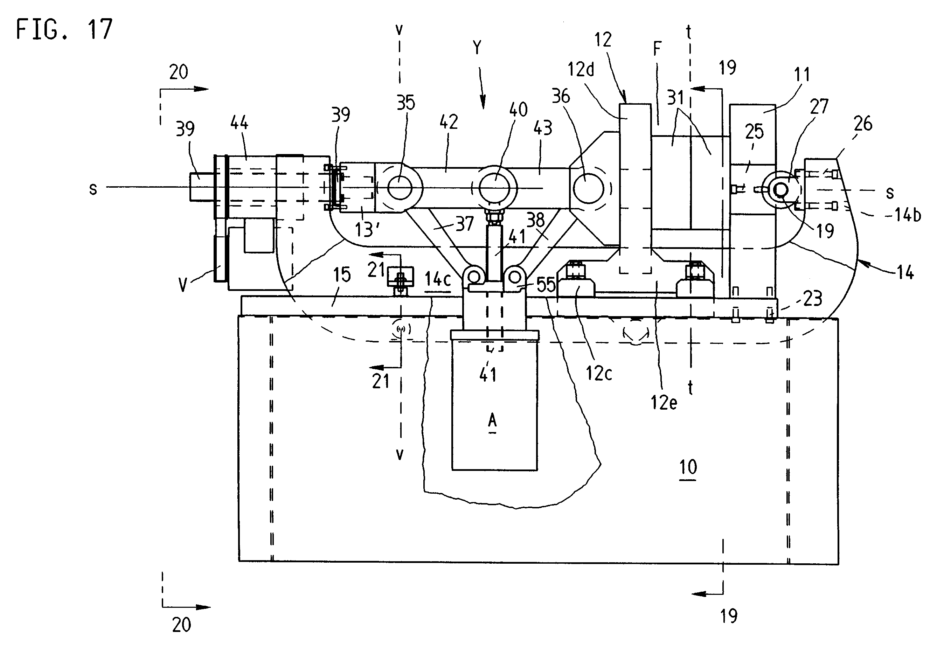

Allen Ausführungsbeispielen ist gemeinsam, daß auf einem Maschinenfuß 10 oder einem Teil davon wie z.B. einem Schwenkrahmen 29 ein stationärer Formträger 11 und ein beweglicher Formträger 12 angeordnet sind. Für die Bewegung des beweglichen Formträgers 12 ist ein Schließmechanismus S vorgesehen, der an einem Abstützelement 13 angeordnet ist. Das Abstützelement 13 ist mit dem stationären Formträger über wenigstens ein Kraftübertragungselement beweglich verbunden, das im wesentlichen die bei geschlossener Gießform 31 auftretenden Schließ- und Spritzkräfte aufnimmt. Der bewegliche Formträger 11 bewegt sich entlang einer Bewegungsbahn, vorzugsweise auf Führungen 15, 22. Die Formträger weisen zwischen sich einen Formspannraum F für eine Gießform 31 in Fig. 17 auf. Sowohl am stationären Formträger 11 als auch am beweglichen Formträger 12 sind Teile der Gießform 31 festlegbar.

Das Kraftübertragungselement überträgt nicht nur die Kräfte, sondern ist als gesondertes, durch die Kräfte verformbares, Verformungselement und in den Ausführungsbeispielen als Bügel 14 ausgebildet. Die Bügelform ermöglicht zwar den leichten Zugang zum Formspannraum, jedoch sind auch andere Formen möglich. Der stationäre Formträger 11 ist über Befestigungselemente 23 am Maschinenfuß befestigt. Demgegenüber sind sämtliche anderen Teile der Formschließeinheit, also insbesondere beweglicher Formträger und Abstützelement gegenüber dem Maschinenfuß beweglich. In den Figuren erkennt man, daß das Abstützelement lediglich an der Schiene 22 oder der Führungsschiene 15 beweglich gepratzt ist und gegenüber dem Maschinenfuß längs der Schließrichtung beweglich ist. Werden Kräfte aufgebracht, so nehmen diese keinen Einfluß auf den Maschinenfuß, da es im wesentlichen nach Ableitung der sonstigen Verformungen nur noch zu einer vom Maschinenfuß unabhängigen Axialbewegung in Schließrichtung kommt.

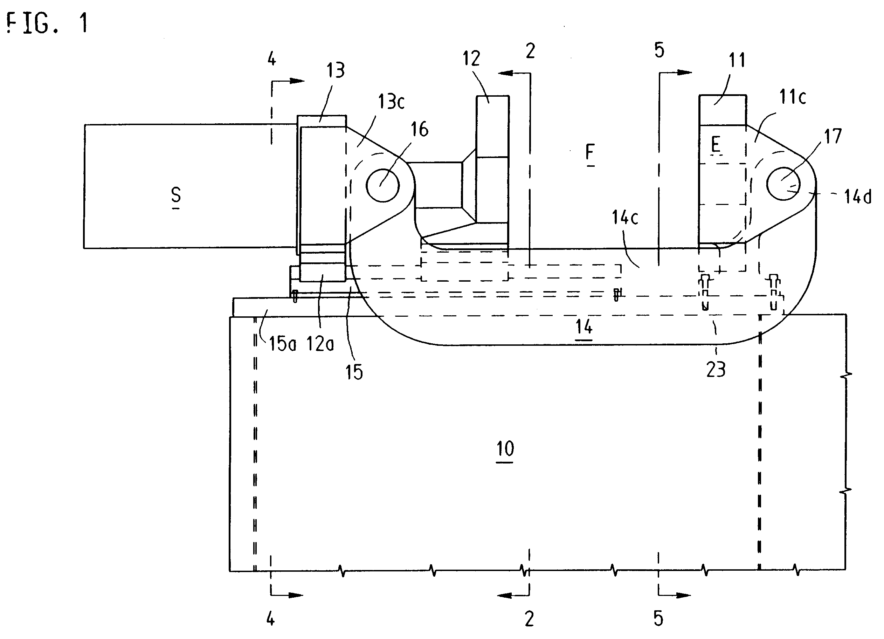

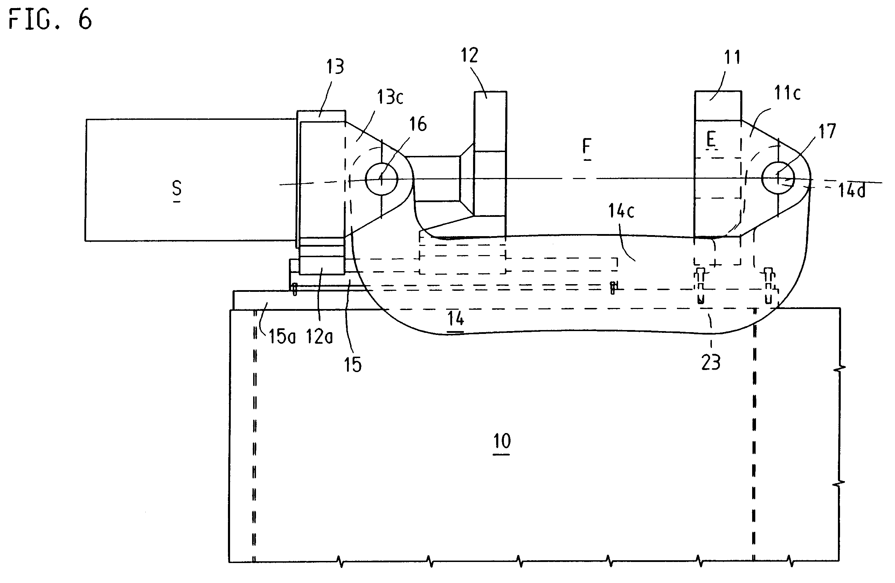

Aus einem Vergleich der Fig. 1 und 6 ist ersichtlich, daß durch das Verformungselement 14 eine Entkopplung der Verformungen von den in Schließrichtung wirkenden Axialkräften möglich wird. Dazu ist das Verformungselement frei aufgehängt und mit dem Abstützelement 13 und dem stationären Formträger 11 gelenkig verbunden. Das Verformungselement wird durch zwei C-förmige Bügel 14 gebildet, wodurch die Einspritzöffnung E freigehalten ist. Die Anlenkung des Bügels am stationären Formträger und dem Abstützelement 13 erfolgt über Lagerelemente.

In den ersten beiden Ausführungsbeispielen ist der C-förmige Bügel 14 an Anformungen 11c, 13c von stationärem Formträger und Abstützelement 13 angelenkt. In einer Ausnehmung der Anformung 11c ist der Bolzen 17 gelagert, der ein Auge 14d des Bügels 14 durchgreift. Auf der anderen Seite ist der Bügel 14 über Bolzen 16 mit der Anformung 13c der als Abstützelement ausgebildeten Zylinderplatte verbunden, wobei der Anlenkungspunkt zwischen Zylinderplatte und beweglichem Formträger 12 liegt.

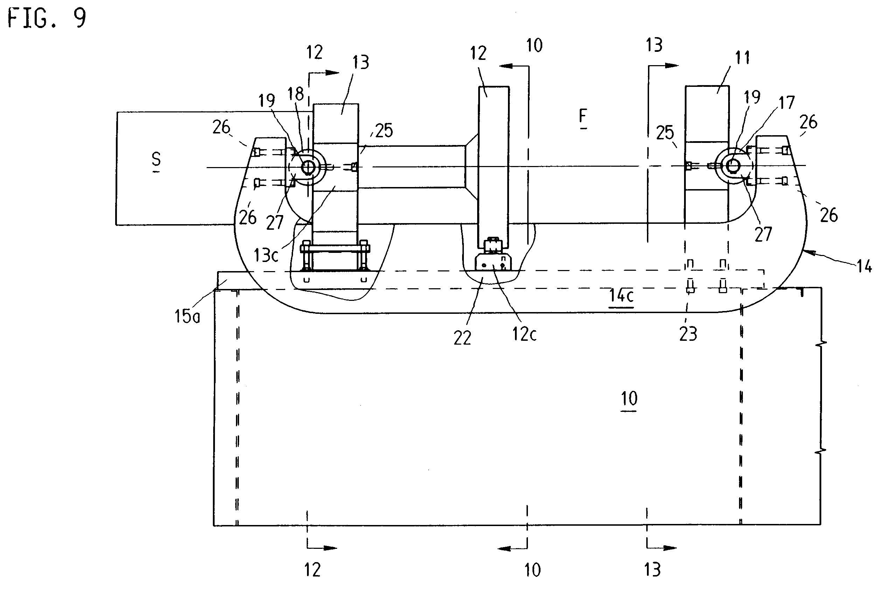

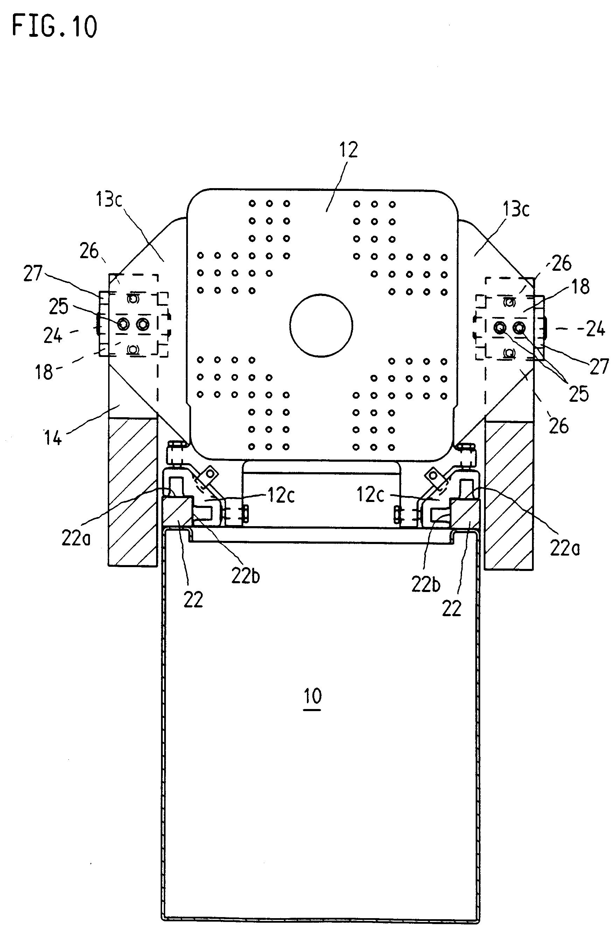

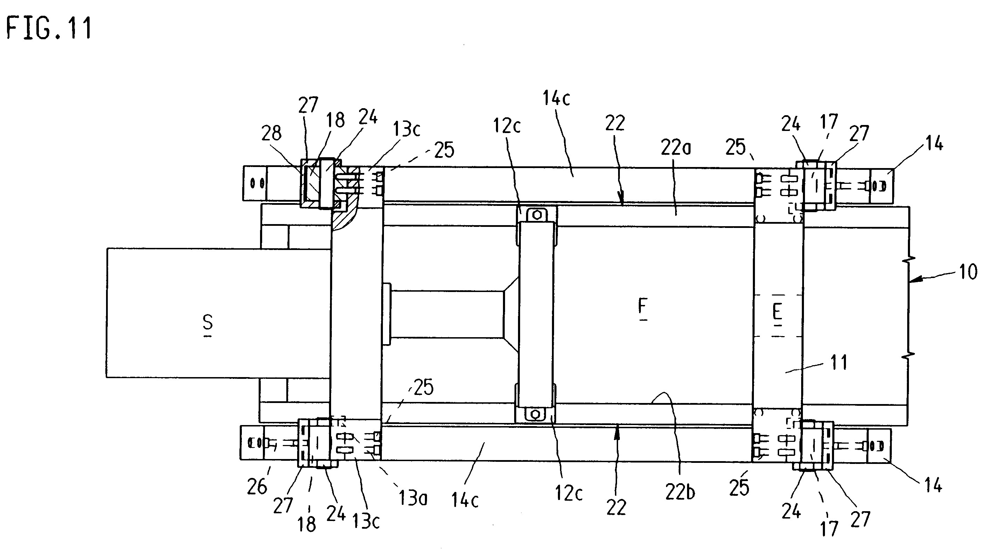

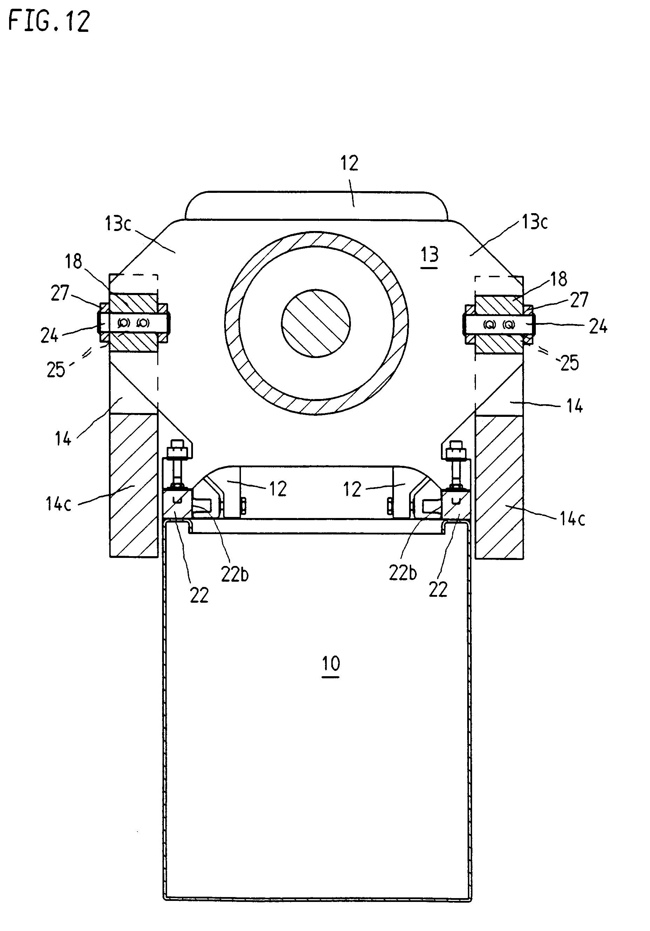

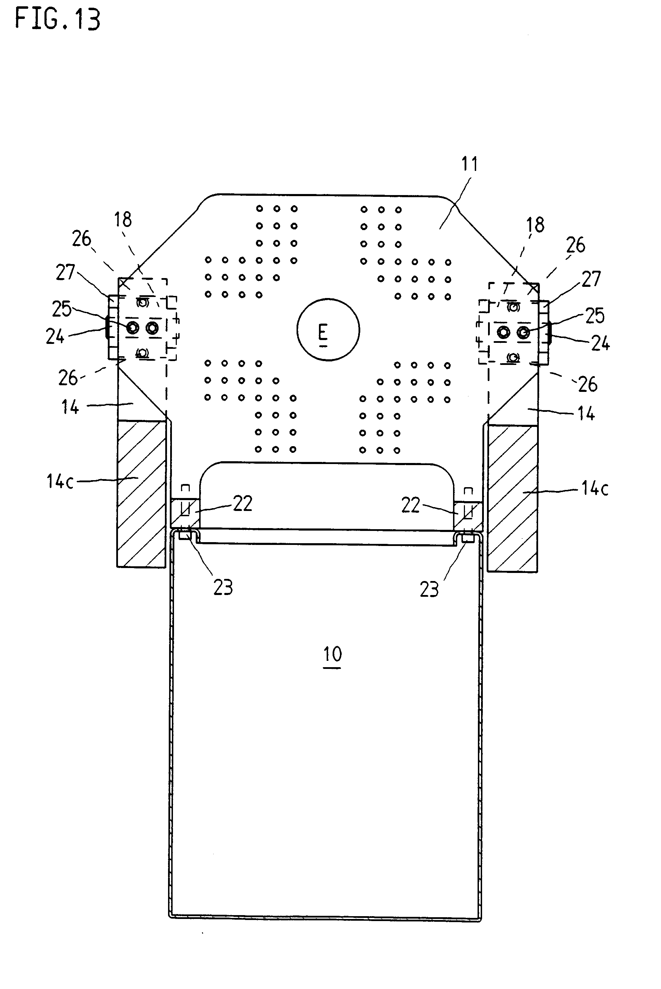

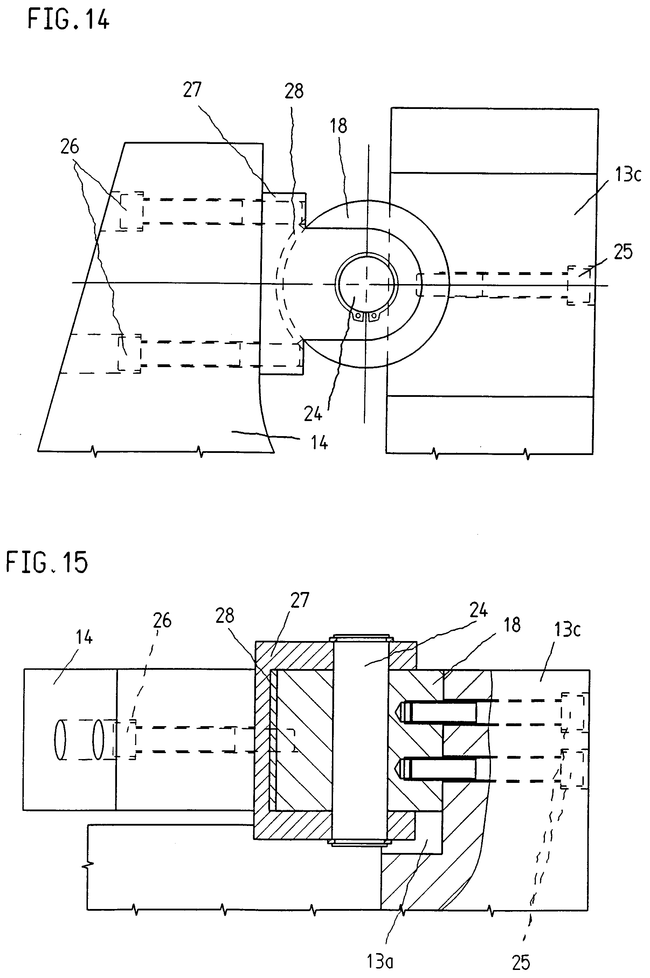

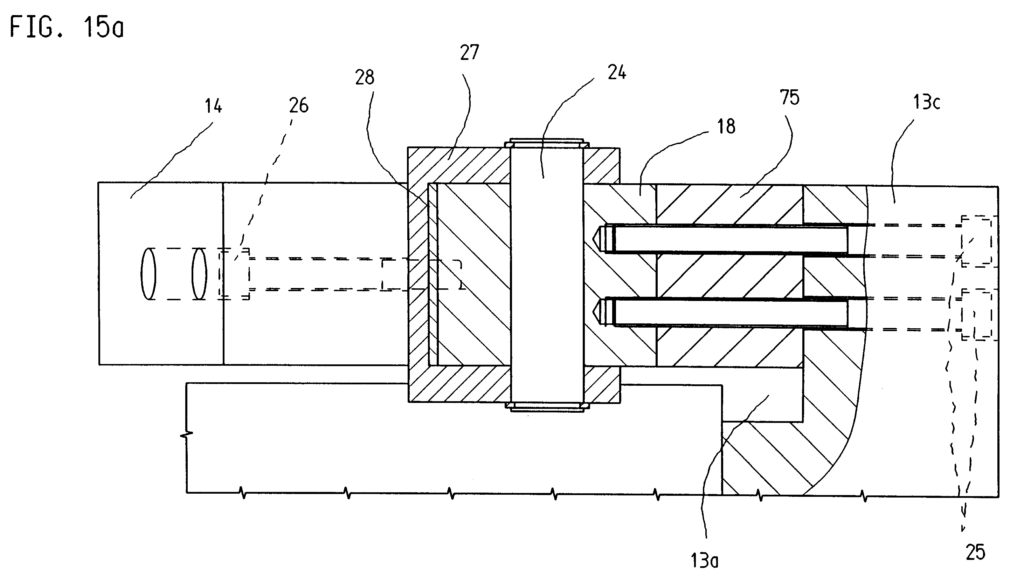

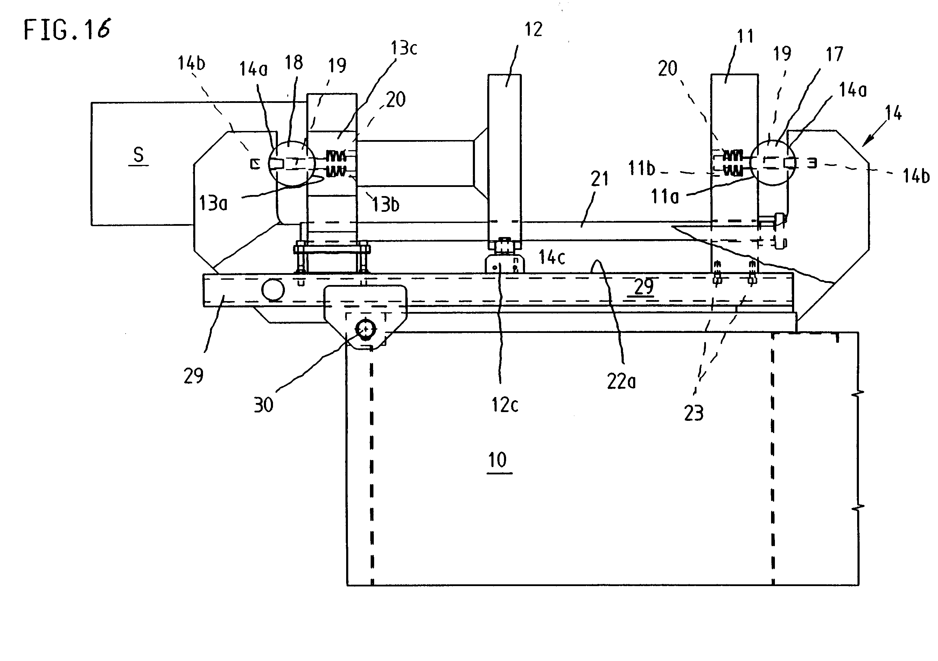

Im dritten Ausführungsbeispiel (Fig. 9-15a) werden Bolzen 17 und 18 vorgesehen, die als Teile eines Lagers durch Schrauben 25 am stationären Formträger 11 oder an dem Abstützelement 13 befestigt sind (Fig. 15, 16). Die Bolzen stehen über ein Gleitlager 28 mit einem Lagerbock 27 in Verbindung, der mit Schrauben 26 am Bügel 14 befestigt ist. Dadurch lassen sich die Kräfte momentenfrei übertragen.

Im vierten Ausführungsbeispiel sind Bolzen 17 und 18 so angeordnet, daß sie beim Formschluß formschlüssig zwischen stationärem Formträger 11 und Bügel 14 bzw. Abstützelement 13 und Bügel 14 aufgenommen sind. Der Anlenkungspunkt im Bereich des Abstützelements 13 ist auf der vom beweglichen Formträger 12 abgewandten Seite des Abstützelements angeordnet. In Fig. 16 ist zu erkennen, daß die Bolzen 17, 18 in Ausnehmungen 11a, 13a, 14a des Bügels 14, des stationären Formträgers 11 und des Abstützelements 13 gelagert sind. Sie werden senkrecht zu ihrer Achse von weiteren Lagerbolzen 19 durchgriffen, die in Bohrungen 11b, 13b, 14b von Bügel 14, stationärem Formträger 11 oder Abstützelement 13 eintauchen. Beim Formschluß gelangen die Lagerbolzen 19 gegen die Kraft von Federn 20 in die Bohrungen 11b, 13b von stationärem Formträger und Abstützelement 13. Diese Anordnung unterstützt die Überwindung der Entformkräfte, führt jedoch auch zu Reibkräften, die die Abkopplung von den Verformungen erschweren. Die unterschiedlichen Anordnungsmöglichkeiten des Bügels schaffen eine vom Stand der Technik unerreichte Anpassungsfähigkeit an Kundenwünsche z.B. hinsichtlich unterschiedlicher Werkzeugeinbaumaße, wenn der Bügel vor oder hinter dem Abstützelement angelenkt wird. Die Gelenkteile Bolzen 16, 17,18 und Lagerbock 27 der Gelenke sind durch Schrauben an den gelenkig miteinander verbundenen Teilen der Schließeinheit lösbar befestigt. Falls erforderlich, können längere Schrauben 25' in Verbindung mit Unterlegstücken 75 eine Veränderung des Werkzeugeinbaumaßes ermöglichen, die zwischen den Gelenkteilen und den angrenzenden Bauteilen einfügbar sind (Fig. 15a).

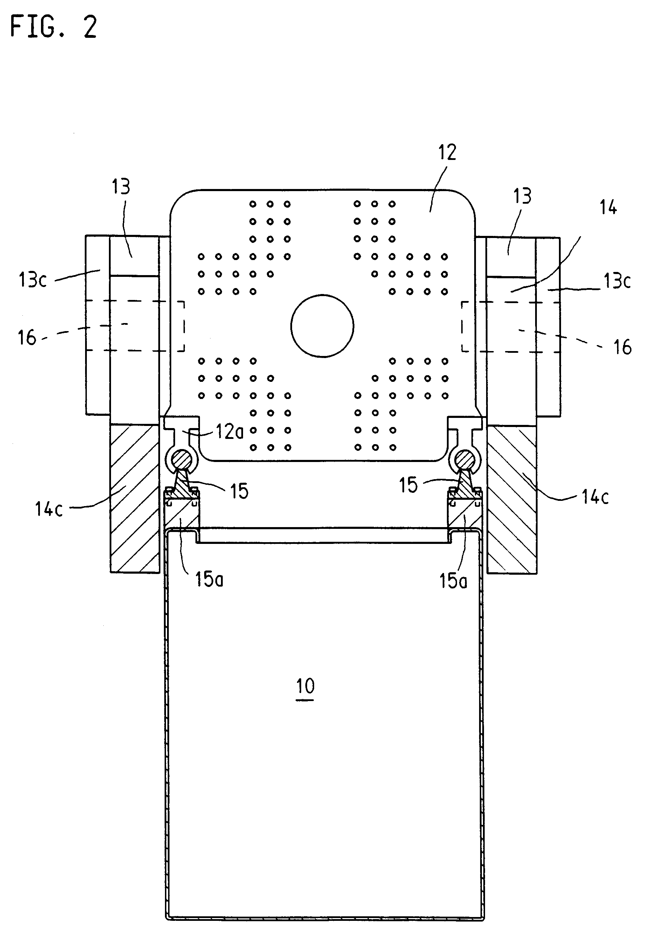

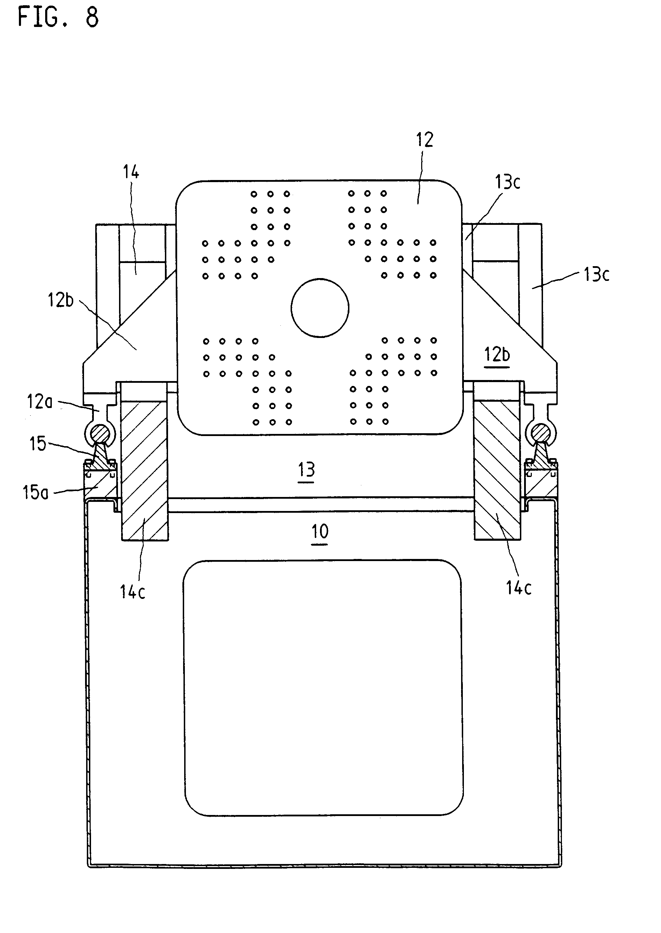

Während im ersten Ausführungsbeispiel der Bügel 14 außerhalb des Maschinenfußes 10 angeordnet ist (Fig. 2), was zu einem verhältnismäßig schmalen Maschinenfuß führt, ist im zweiten Ausführungsbeispiel der Bügel 14 innerhalb des Maschinenfußes und auch innerhalb der Führungsschienen 15 angeordnet. Um den beweglichen Formträger dennoch auf den Führungsschienen zu führen, besitzt der bewegliche Formträger 12 Anformungen 12b, die den Bügel übergreifen, um den beweglichen Formträger auf dem Maschinenfuß 10 zu bewegen. Ein Vergleich der Figuren 2 und 8 macht deutlich, daß aufgrund der innen liegenden Anordnung des Bügels ein breiterer Maschinenfuß erforderlich ist, der bessere Aufnahmemöglichkeiten für Bauteile der Maschine bietet. Der Bügel 14 kann auch weitgehend oberhalb der Spritzachse s-s angeordnet sein und die Spritzgießmaschine nach oben abschließen. Dies verdeutlicht, daß die Formschließeinheit von der Anordnung des Bügels unabhängig ist, was ihr eine Vielfalt von Einsatzmöglichkeiten eröffnet. Problemlos kann die Formschließeinheit um einen Schwenkbolzen 30 mitsamt einem Schwenkrahmen 29 in eine vertikale Stellung überführt werden (Fig. 16). Abweichend von den Ausführungsbeispielen können auch mehrere Bügel gleichzeitig innerhalb, außerhalb und/oder auf dem Maschinenfuß angeordnet werden, um z.B. größere Kräfte übertragen zu können.

Um eine Formparallelität zu gewährleisten, ist der bewegliche Formträger auf Führungen der Bewegungsbahn am Maschinenfuß 10 geführt. In den ersten beiden Ausführungsbeispielen handelt es sich um zwei Führungsschienen 15, die auf dem Lager 15a angeordnet sind und auf denen der bewegliche Formträger 12 durch Gleitschuhe 12a gegen Abheben gesichert ist. Nach dem vierten Ausführungsbeispiel (Fig. 16) sind trotz des Verformungselementes Bügel 14 noch Führungsstangen 21 vorgesehen, die am stationären Formträger 11 und an dem Abstützelement 13 gelagert sind. Sie befinden sich in einem Raum, der nach beiden Seiten durch den Bügel 14 abgeschlossen ist, so daß sie kein zusätzliches Hindernis im Formspannraum F darstellen.

Sie liegen also in einem Bereich, der durch die vertikale Abmessung des Schenkels 14c des Bügels vorgegeben ist. Die eigentliche Abstützung des beweglichen Formträgers erfolgt über Stützelemente 12c, die an einer horizontalen 22a und einer vertikalen Lauffläche 22b einer Schiene 22 am Maschinenfuß 10 geführt sind. Im dritten Ausführungsbeispiel wird auf die Führungsstangen 21 verzichtet.

Im fünften Ausführungsbeispiel der Fign. 17-24 greift als Schließmechanismus ein Kniehebelmechanismus mit dem Anlenkungspunkt 36 am beweglichen Formträger 12 an und mit dem Anlenkungspunkt 35 an einem Abstützelement 13'. Er überführt den beweglichen Formträger in und außer Schließposition. Der Kniehebelmechanismus ist als "Y-Kniehebel" ausgebildet, d.h., seine quer zur Schließrichtung s-s angeordnete Antriebseinrichung A wird vom Kniehebelmechanismus Y über zwei Halteelemente 37, 38 frei beweglich gehalten. Als Antriebseinrichtung wird ein elektro-mechanischer Linearantrieb verwendet, bei dem eine Rotationsbewegung in eine Geradeausbewegung umgesetzt wird. Der Kniehebelmechanismus Y besitzt zwei Hebel 42, 43, die über einen Gelenkpunkt 40 miteinander verbunden sind. An diesem Gelenkpunkt 40 greift auch ein Linearelement des Linearantriebes an.

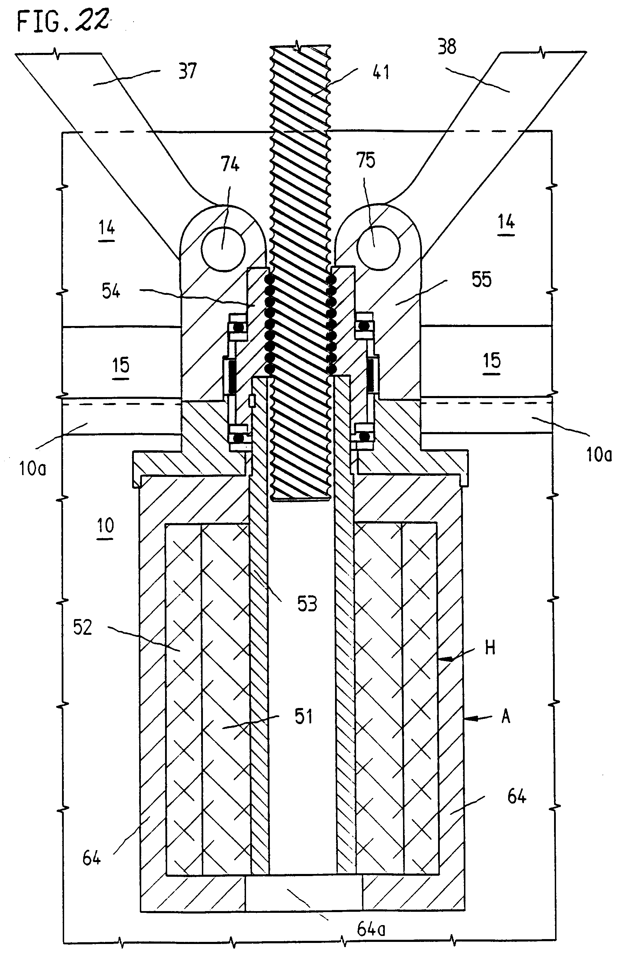

Als Linearantrieb kann z.B. eine Kugelrollspindel vorgesehen werden, aber auch eine Doppelzahnstange 41' ist einsetzbar. Die Kugelrollspindel kann in einem Hohlwellenmotor H angeordnet sein, der zugleich die Antriebseinrichtung A ist (Fig.22). Der Hohlwellenmotor H besitzt in einem Gehäuse 64 einen Stator 52 und einen Rotor 51. Der Rotor 51 steht mit einer Hülse 53 in Verbindung. Die Hülse 53 trägt koaxial eine mit der Kugelrollspindel 41 zusammenwirkende Gewindemutter 54. Bei Formschluß bewegt sich infolge der Rotation der Gewindemutter die Kugelrollspindel 41 in die Hülse hinein oder heraus. Bedarfsweise kann sie unten aus der Antriebseinrichtung über eine Öffnung 64a des Gehäuses wieder austreten. Die die Antriebseinrichtung tragenden Halteelemente 37,38 sind an Anlenkungspunkten 74,75 mit einem Verbinderteil 55 verbunden, das die eigentliche Antriebseinrichtung trägt. Der Kniehebelmechanismus Y ist vertikal beweglich und nach unten entriegelbar.

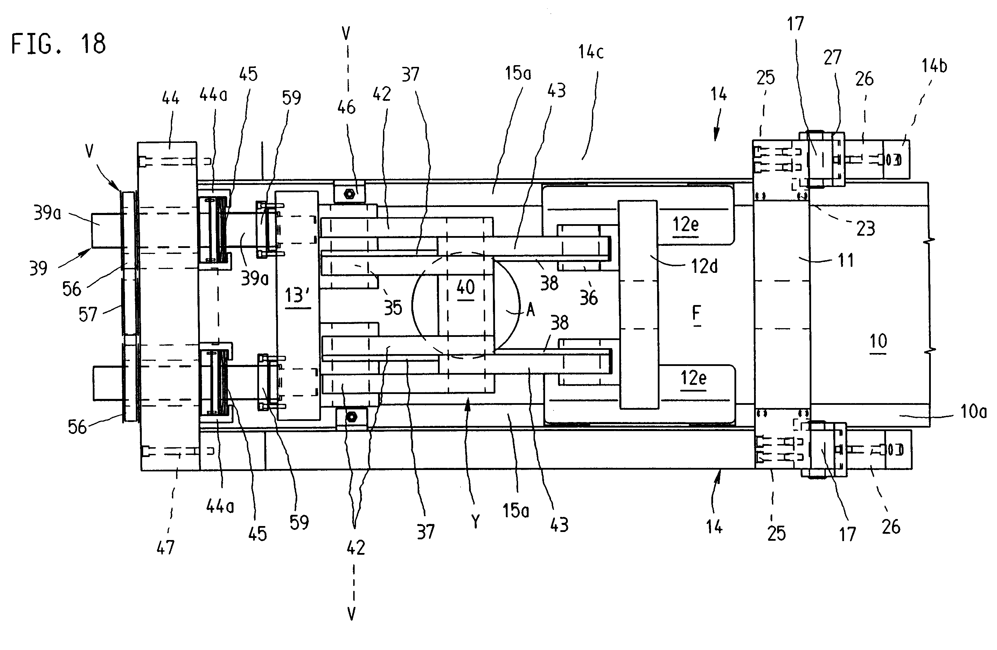

Der bewegliche Formträger 12 muß in Verbindung mit dem nur angelenkten Kniehebelmechanismus zuverlässig geführt werden. Dazu weist er einen flachen, plattenförmigen und senkrecht stehenden Teil 12d auf und besitzt zwei Stützteile 12e. Die Teile 12d, 12e des Formträgers 12 können einstückig ausgebildet oder miteinander verbunden sein. Die Stützteile 12e erstrecken sich sowohl in einem Bereich außerhalb des Formspannraumes F, als auch in Richtung auf den stationären Formträger 11. Dadurch wird die Abstützfläche und die Fläche zur Aufnahme von Kippmomenten vergrößert. Die Funktion eines im Bereich der Trennebene t-t angeordneten Fallschachtes wird nicht beeinträchtigt, da die Abstützung nur im Randbereich erfolgt, der ohnehin bereits teilweise durch den oberen Rand 10a des Maschinenfußes beansprucht wird (Fig. 18).

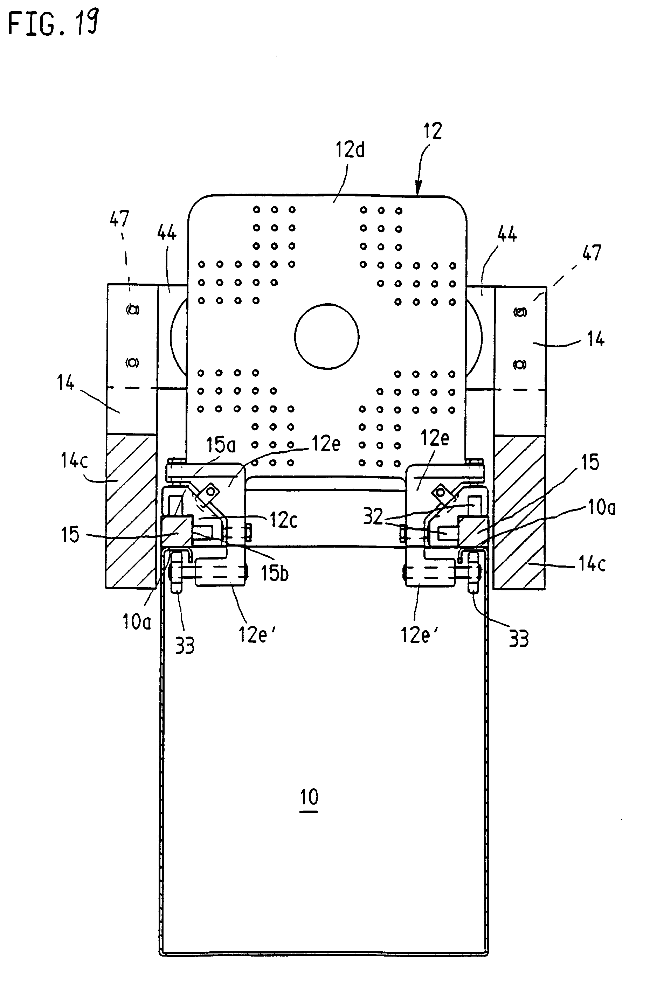

Die Stützteile 12e hintergreifen die Führungen auf der dem Formspannraum F gegenüberliegenden Seite und sind an den Führungen über einen Zentriwinkel von wenigstens 180° geführt. Gemäß Fig. 19 sind in beiden Stützteilen 12e vorzugsweise als Rollenkassetten 32 ausgebildete Laufelemente eingebaut, die in bekannter Weise an horizontalen und vertikalen Laufflächen 15b einer als Führung ausgebildeten, auf dem Maschinenfuß 10 vorgesehenen Führungsschiene 15 geführt sind. Denkbar ist dabei nur eine horizontale und zwei vertikale Rollenkassetten vorzusehen. Das Stützteil 12e greift mit einem Arm 12e' in den Maschinenfuß unter die Führungsschiene. Am Arm 12e' ist ein Hintergriffselement 33 angeordnet, das auf einem umgebördelten oberen Rand 10a des Maschinenfußes 10 von unten anliegt. Stattdessen können auch in die Stützteile 12e eingebaute Kugellager 34 die als Führungen ausgebildete Führungsstangen 21 umgreifen. In beiden Fällen nimmt der Umgriff noch auftretende Kräfte auf, die den beweglichen Formträger vom Maschinenfuß abheben wollen, aufzunehmen.

Die gelenkige Anordnung des "Y-Kniehebels" kann auch vorteilhaft in Verbindung mit dem Verformungselement gebracht werden. Hierzu ist der stationäre Formträger 11 über wenigstens einen Bügel 14 beweglich mit dem Ab-stützelement 13' verbunden. Im "Windschatten" eines Schenkels 14c des Bügels 14 können Führungen für die Stützteile 12e und beispielsweise die Lagerungen der Rollenkassetten 32 in den Stützelementen 12c vor-gesehen werden, ohne daß ein gesonderter Raum beansprucht werden muß.

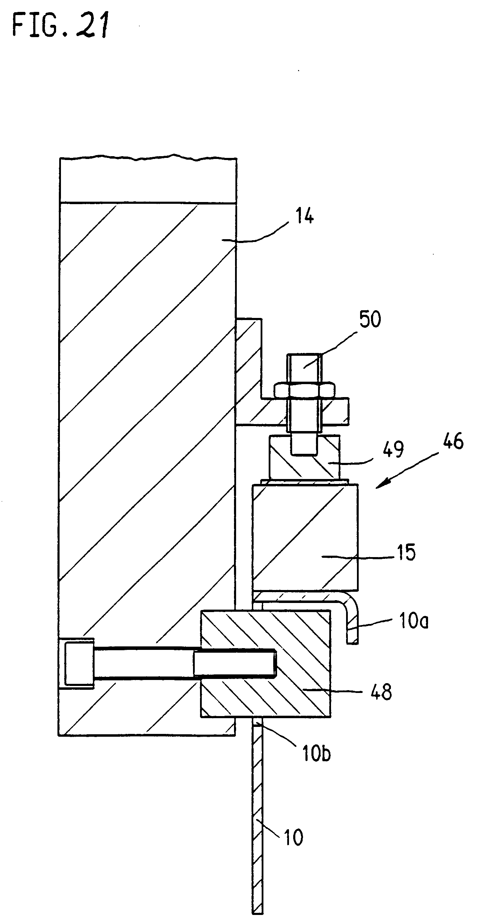

Das Abstützelement 13' steht mit dem Bügel 14 in Verbindung und der Bügel seinerseits kann als Lagerung gemäß Fig. 21 ausgebildet werden. Das Lagerelement 46 wird dabei über einen Winkel im Bereich der neutralen Faser des Bügels 14 befestigt. Eine Feinjustierung ist über das Justierelement 50 möglich, das auf einem Gleitelement 49 abgestützt ist. Das Gleitelement 49 übernimmt die eigentliche Lagerung auf der Führungsschiene 15. Um beim Anheben der Formschließeinheit ein Abheben vom Maschinenfuß zu vermeiden, ist ein weiteres Element 48 in einer Ausnehmung 10b des Maschinenfußes axial beweglich gelagert. Dieses Element kommt grundsätzlich mit dem Maschinenfuß nicht in Berührung. Erst im Falle eines Anhebeversuches wird eine Verbindung zwischen Formschließeinheit und Maschinenfuß hergestellt. Die Lagerelemente 46 sind nach Fig. 17 in einer senkrecht zur Schließrichtung gelegenen Ebene v-v angeordnet, die ungefähr durch den Anlenkungspunkt 35 geht. Diese Lage wurde deshalb gewählt, da dieser Punkt der Gelenkpunkt für das Verformungselement ist, so daß sich hier die geringsten Verformungen ergeben.

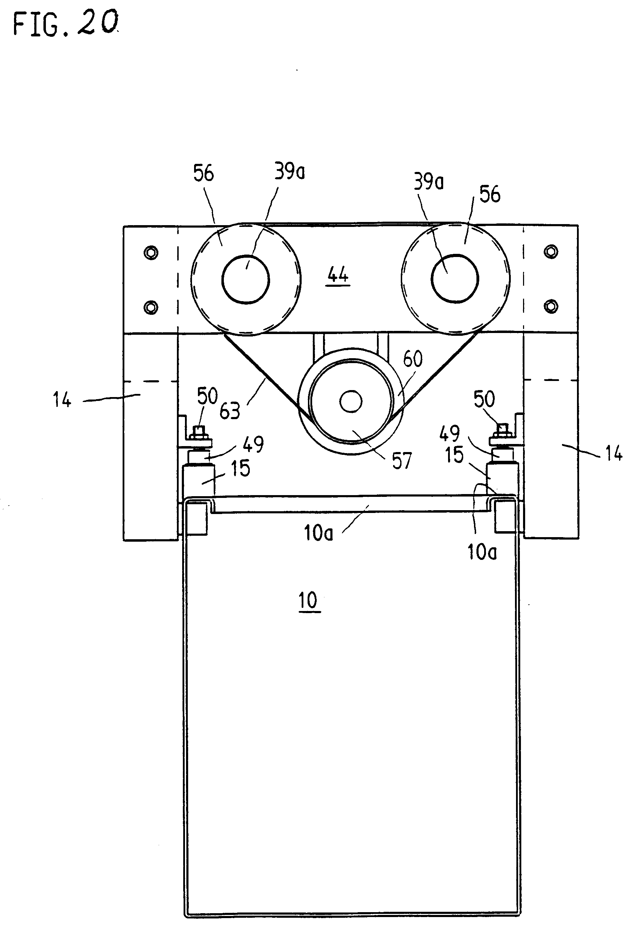

Bei einem Kniehebelmechanismus muß eine Formhöhenverstellung V vorgesehen sein, die bei unterschiedlichen Formhöhen eine gleichbleibende Lage der Schließrichtung s-s erlaubt. Zu diesem Zweck ist ein Spindelantrieb 39 vorgesehen, der gemäß Figur 18 an einem Widerlager 44 abgestützt ist und über seine Gewindespindel 39a mit dem Abstützelement 13' in Verbindung steht. Die zwei Spindelantriebe 39 können dabei beim Einrichten der Maschine je gesondert angetrieben werden, so daß sich eine exakte Paralleleinstellung zwischen beweglichem Formträger 12 und stationärem Formträger 11 ergibt. Im Betriebszustand sind dann beide Spindelantriebe über einen gemeinsamen Antrieb 60 verstellbar. Über eine Riemenscheibe 57 treibt er zwei Riemenscheiben 56 für die Gewindespindeln über einen oder mehrere Riemen 63 an (Fig.20). Gemäß Figur 18 wird das die exakte Kraftaufbringung störende Gewindespiel durch Tellerfedern 45 unterdrückt, die an einem Abstandshalter 44a gehalten sind.

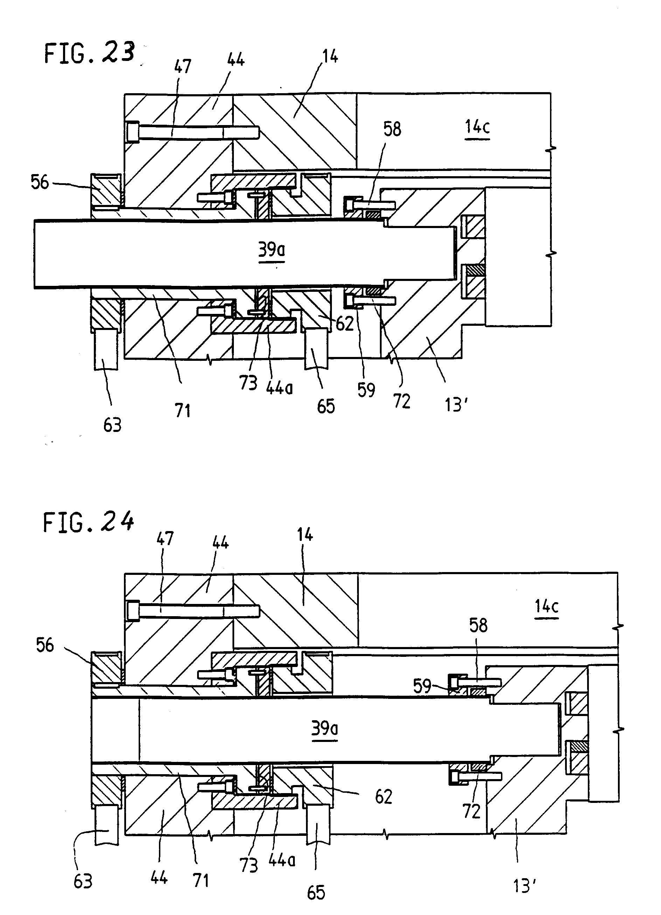

Gemäß Fig. 23-24 können auch über einen zweiten Antrieb Gewindehülsen 62 angetrieben werden, die als Riemenscheiben ausgebildet sind. Die Gewindehülse 62 ist mit ihrem Außengewinde am Abstandshalter 44a im Gewindeeingriff. Im gelösten Zustand kann über den Antrieb 60 die Riemenscheibe 56 betätigt werden, was zu einem Verstellen der Gewindespindel 39a führt. Im Widerlager 44 ist die Mutter 71 des Spindelantriebs in einer Bohrung gehalten. Nach erfolgter Verstellung kann durch eine gegenläufige Bewegung des Riemens 65 des zweiten Antriebs die Gewindehülse 62 in Richtung auf den Abstandshalter 44a gepreßt werden, so daß die Mutter 71 über die Gewindespindel 39a und den Verstellring 73 festgepreßt wird. Die Gewindespindel 39a ist am Abstützelement 13' mit Spiel aufgenommen. Die Festlegung erfolgt über Zugbolzen 58, die an einem Abstützring 59 angreifen. Beim Anziehen und somit Justieren der Zugbolzen wird die Gewindespindel 39a gegen das Widerlager 72 vorgespannt.

## Patentansprüche

1. Spritzgießmaschine mit einem Maschinenfuß (10), einem mit dem Maschinenfuß oder einem Teil davon fest verbundenen, stationären (11) und einem beweglichen Formträger (12) sowie mit einem einen Schließmechanismus (S) für die Bewegung des beweglichen Formträgers (12) tragenden Abstützelement (13), das mit dem stationären Formträger (11) über wenigstens ein Kraftübertragungselement gelenkig verbunden ist, das im wesentlichen die bei geschlossener Gießform (31) auftretenden Kräfte aufnimmt, sowie mit einer Bewegungsbahn für den beweglichen Formträger (12),
dadurch gekennzeichnet, daß das Kraftübertragungselement als gesondertes, durch die Kräfte verformbares Verformungselement (14) ausgebildet ist, daß das Abstützelement (13) am Maschinenfuß (10) mittels einer Führung (15, 21, 21, 22) in Schließrichtung geradlinig beweglich gelagert ist, wobei Gelenkteile (16, 17, 18; 27) für die gelenkige Verbindung lösbar an Abstützelement (13) bzw. stationärem Formträger (11) und am Verformungselement (14) angeordnet sind.

2. Spritzgießmaschine nach Anspruch 1, dadurch gekennzeichnet, daß Bolzen (17, 18) mit Schrauben (25) am Abstützelement (13) und am stationären Formträger (11) lösbar befestigt sind und mit am als Bügel (14) ausgebildeten Verformungselement mittels Schrauben (26) lösbar befestigten Lagerböcken (27) Gelenke bilden.

3. Spritzgießmaschine nach Anspruch 2, dadurch gekennzeichnet, daß der Bolzen (17, 18) in Ausnehmungen (11a,13a,14a) des Bügels (14) und des stationären Formträgers (11) oder des Abstützelements (13) gelagert ist und von senkrecht zur Bolzenachse stehenden weiteren Lagerbolzen (19) durchgriffen ist, die in Bohrungen (11b,13b,14b) von Bügel (14) und stationärem Formträger (11) oder Abstützelement (13) eintauchen.

4. Spritzgießmaschine nach einem der vorhergehenden Ansprüche, dadurch gekennzeichnet, daß der Abstand zwischen stationärem (11) und beweglichem Formträger (12) durch Unterlegstücke (75) veränderbar ist, die zwischen Gelenkteilen und staionärem Formträger (11), Abstützelement (13) und/oder Verformungselement einfügbar sind.

5. Spritzgießmaschine nach einem der vorhergehenden Ansprüche, dadurch gekennzeichnet, daß der Schließmechanismus ein Kniehebelmechanismus (Y) ist und daß ein Verbindungselement (55) über zwei an Anlenkungspunkten (35, 36) des Kniehebelmechanismus (Y) am beweglichen Formträger (12) und an dem Abstützelement (13') angelenkte Halteelemente (37, 38) gelenkig aufgehängt ist, an dem die Antriebseinrichtung (A) befestigt ist.

6. Spritzgießmaschine nach Anspruch 5, dadurch gekennzeichnet, daß die Antriebseinrichtung als Hohlwellenmotor (H) ausgebildet ist, in dem eine als Antriebselement ausgebildete Kugelrollspindel (41) gelagert und zumindest teilweise aufnehmbar ist.

7. Spritzgießmaschine nach Anspruch 5 oder 6, dadurch gekennzeichnet, daß der Bügel (14) das Abstützelement (13') am Maschinenfuß (10) im Bereich der neutralen Faser des Bügels (14) über Lagerelemente (46) in Schließrichtung (s-s) beweglich lagert, die in einer senkrecht zur Schließrichtung gelegenen Ebene (v-v) angeordnet sind, die ungefähr durch den Anlenkungspunkt (35) des Kniehebelmechanismus (Y) gelegt ist.

## Claims

1. Injection moulding machine with a machine base (10), a stationary mould carrier (11) securely connected to the machine base or a part of same, and a movable mould carrier (12), as well as with a supporting element (13) bearing a closing mechanism (S) for the movement of the movable mould carrier (12), said supporting element being hinged to the stationary mould carrier (11) via at least one force transmitting element, which substantially takes up the forces occurring when the mould (31) is closed, as well as with a motion path for the movable mould carrier (12), characterised in that the force transmitting element is configured as a deforming element (14), deformable by the forces, in that the supporting element (13) is mounted on the machine base (10) by means of a guiding device (15, 21, 22) so as to be movable in a straight line in the closing direction, joint parts (16, 17, 18; 27) for the hinged connection being detachably arranged on the supporting element (13) or stationary mould carrier (11) and on the deforming element (14).

2. Injection moulding machine according to claim 1, characterised in that studs (17, 18) are detachably fastened with screws (25) to the supporting element (13) and the stationary mould carrier (11) and form joints with pillow blocks (27) detachably fastened by means of screws (26) to the deforming element configured as a shackle (14).

3. Injection moulding machine according to claim 2, characterised in that the stud (17, 18) is mounted in recesses (11a,13a,14a) of the shackle (14) and of the stationary mould carrier (11) or of the supporting element (13) and is penetrated by further bearing pins (19) standing vertical to the stud axis and plunging into bore holes (11b,13b,14b) of the shackle (14) and stationary mould carrier (11) or supporting element (13).

4. Injection moulding machine according to one of the preceding claims, characterised in that the distance between the stationary (11) mould carrier and the movable mould carrier (12) may be altered by washer pieces (75), which may be inserted between joint parts and the stationary mould carrier (11) supporting element (13) and/or deforming element.

5. Injection moulding machine according to one of the preceding claims, characterised in that the closing mechanism is a toggle mechanism (Y) and in that a joining element (55) is suspended in an articulated manner via two holding elements (37, 38) linked to link points (35, 36) of the toggle mechanism (Y) on the movable mould carrier (12) and on the supporting element (13'), and the driving unit (A) is fastened to said joining element (55).

6. Injection moulding machine according to claim 5, characterised in that that the driving device is configured as a quill drive (H) in which a ball rolling spindle (41) configured as the driving element is mounted and may be at least partially received.

7. Injection moulding machine according to claim 5 or 6, characterised in that the shackle (14) carries the supporting element (13') at the machine base (10) in the area of the neutral fibres of the shackle (14), so as to be movable in the closing direction (s-s), via bearing elements (46) which are disposed in a plane (v-v) which is perpendicular to the closing direction and passes approximately through the link point (35) of the toggle mechanism (Y).

## Revendications

1. Presse d'injection comportant une base de presse (10), un support de moule fixe (11) fixé à la base de presse ou à une partie de celle-ci, un support de moule mobile (12), un dispositif de fermeture (S) qui, pour le déplacement du support de moule mobile (12), porte un élément de support (13) articulé au support de moule fixe (11) par au moins un organe de transmission reprenant essentiellement les efforts apparaissant lorsque le moule (31) est fermé, et un trajet de déplacement du support de moule mobile (12), caractérisée en ce que l'organe de transmission est formé comme un organe de déformation séparé (14) pouvant être déformé par les efforts, en ce que l'élément de support (13) est disposé sur la base de presse (10) au moyen d'un guidage (15,21,22) de manière à être déplaçable linéairement dans la direction de fermeture, des organes d'articulation (16,17,18;27) étant pour la liaison articulée disposés de manière détachable sur l'élément de support (13) ou sur le support de moule fixe (11) et sur l'élément de déformation (14).

2. Presse d'injection selon la revendication 1, caractérisée en ce que des axes (17,18) sont à l'aide de vis (25) fixés de manière détachable sur l'élément de support (13) et sur le support de moule fixe (11) et forment des articulations avec des supports (27) formant palier fixés de manière détachable à l'aide de vis (26) sur l'élément de déformation en forme d'étrier (14).

3. Presse d'injection selon la revendication 2, caractérisée en ce que les axes (17,18) sont disposés dans des évidements (11a,13a,14a) de l'étrier (14) et du support de moule fixe (11) ou de l'élément de support (13) et sont traversés par d'autres axes formant palier (19) s'étendant perpendiculairement à l'axe des axes, les axes de support (19) pouvant pénétrer dans des alésages (11b,13b,14b) de l'étrier (14) et du support de moule fixe (11) ou de l'élément de support (13).

4. Presse d'injection selon l'une des revendications précédentes, caractérisée en ce que la distance entre le support de moule fixe (11) et le support de moule mobile (12) peut être modifiée par des éléments d'écartement (75) pouvant être disposés entre les organes d'articulation et le support de moule fixe (11), l'élément de support (13) et/ou l'élément de déformation.

5. Presse d'injection selon l'une des revendications précédentes, caractérisée en ce que le mécanisme de fermeture est un mécanisme à genouillère (Y), et en ce qu'un élément de liaison (55) est par l'intermédiaire d'éléments de maintien (37,38) suspendu de manière articulée par l'intermédiaire de points d'articulation (35,36) sur le support de moule mobile (12) et sur l'élément de support (13'), le dispositif d'entraînement (A) étant fixé à l'élément de liaison.

6. Presse d'injection selon la revendication 5, caractérisée en ce que le dispositif d'entraînement est sous forme d'un moteur à arbre creux (H), dans lequel une broche filetée à billes (41) formant organe d'entraînement est disposée et au moins partiellement reçue.

7. Presse d'injection selon la revendication 5 ou 6, caractérisée en ce que l'étrier (14) porte l'élément de support (13') sur la base de presse (10) de manière mobile dans la direction de fermeture (s-s) dans la zone de l'axe neutre de l'étrier (14) sur des éléments formant palier (46) disposés dans un plan (v-v) perpendiculaire à la direction de fermeture, ce plan s'étendant essentiellement à travers le point d'articulation (35) du mécanisme à genouillère (Y).
